# DEMANDE DE BREVET EUROPEEN

(11) **EP 1 691 054 A1**
(43) Date de publication de la demande: **16.08.2006**
(21) Numéro de dépôt: 05003015.4
(22) Date de dépôt: 12.02.2005
(51) Int. Cl.: F02C 3/05, F01D 5/04, F01D 11/14, F01D 17/16, F01D 25/12, F02C 7/12

(54) **Turbine à gaz**

(71) Demandeur: Antoine, Hubert, 4130 Esneux (BE)
(72) Inventeur: Antoine, Hubert, 4130 Esneux (BE)

(57) **Abrégé**

Une turbine à gaz est présentée dont les aubages de compresseur et de turbine sont disposés dos à dos sur un disque rotor (1).
Le rotor (1) est refroidi par les aubages (5 et 6) du compresseur. Pour garder une température acceptable, les aubages sont nécessairement trapus.
Pour minimiser les jeux en bout d'aubage, les aubages (5 et 7) des stators (18 et 19) sont terminés par des patins et pressés contre le rotor (1) par la pression du liquide de refroidissement (15,16) contenu dans cavités (15,16).
Le liquide de refroidissement assure une température uniforme aux stators et évite leur déformation.

## Description

### L'invention concerne des turbines à gaz à haut rendement

Les turbines à gaz de haut rendement sont caractérisées par une haute température d'entrée en turbine et par des bonnes efficacités des compresseur et turbine.
La haute température d'entrée turbine pose des problèmes de refroidissement des aubages de turbine : en effet aucun alliage métallique connu ne résiste longtemps au niveau de température requis pour un bon rendement thermodynamique de la turbine à gaz. Il faut donc refroidir les aubages, ceci se fait généralement par convection de chaleur à l'intérieur de l'aubage avec de l'air de refroidissement : cette solution nécessite un débit d'air de refroidissement perdu pour le cycle et un usinage précis et coûteux des systèmes de refroidissement de chaque aubage.
Les bonnes efficacités des compresseur et turbine dépendent entre autre du jeu entre pale et stator : En effet, le fluide passant entre la pale et le stator n'effectue pas de travail et perturbe le flux utile passant par la pale. L'influence néfaste de ce jeu est d'autant plus grande que l'aubage est trapu.
Cependant, dans les turbines, ce jeu radial est nécessaire pour éviter un contact catastrophique entre la pale et le stator en cas de vibration du rotor ou en cas de transitoire thermique où la pale se dilate plus que le stator.

L'invention a pour but de refroidir de façon simple les aubages de la turbine et de contrôler les jeux de bout de pales des compresseur et turbine.

Conformément à l'invention, ce but est atteint en disposant les aubages de compresseur et de turbine dos à dos sur un disque en rotation. Les bouts de pales font face à des disques statoriques pouvant, par leur déplacement axial, garder un jeu constant et minime avec les bouts de pale. Ces disques statoriques sont plaqués contre le rotor par une pression extérieure, la pression d'un liquide de refroidissement par exemple.

Une turbine à gaz conçue selon l'invention permet un refroidissement aisé des aubages de turbine par conduction : les aubages turbine viennent de fonderie avec le disque et le flux de chaleur de refroidissement de ces aubages s'évacue par conduction à travers le disque vers les aubages du compresseur, où cette chaleur est dissipée. Ceci fonctionne bien pour autant que les aubages soient assez trapus.
Pour éviter les pertes en bout d'aubage, le stator se présente sous la forme d'un disque mobile axialement muni d'aubages statoriques qui viennent frotter sur le disque rotor. La force de friction est minimisée en garnissant l'extrémité de chaque aubage stator d'un patin venant glisser sur le rotor. On a un glissement lubrifié par le fluide de travail : air du côté compresseur, gaz brûlé du côté turbine. Le jeu est typiquement de quelques microns. On peut dès lors maintenir un jeu minimal entre les bouts d'aubages du stator et le rotor ainsi qu'entre les aubages du rotor et le stator. Ceci favorise un bon rendement des compresseur turbine, la distance axiale stator-rotor étant fixée par la longueur de l'aubage du stator. Pour cela, le disque stator est plaqué contre le rotor par la force de pression du liquide de refroidissement et les jeux sont ainsi automatiquement repris.
D'autre part, le disque stator baigne dans le liquide de refroidissement et a une température uniforme environ égale à celle du fluide de refroidissement. Il n'est donc pas déformé par la température ce qui facilite l'obtention d'un jeu uniforme entre les aubages du stator et le rotor et donc aussi entre les aubages rotor et le stator.

L'invention est décrite ci-après à l'aide d'un exemple et de références aux dessins joints dans lequels :

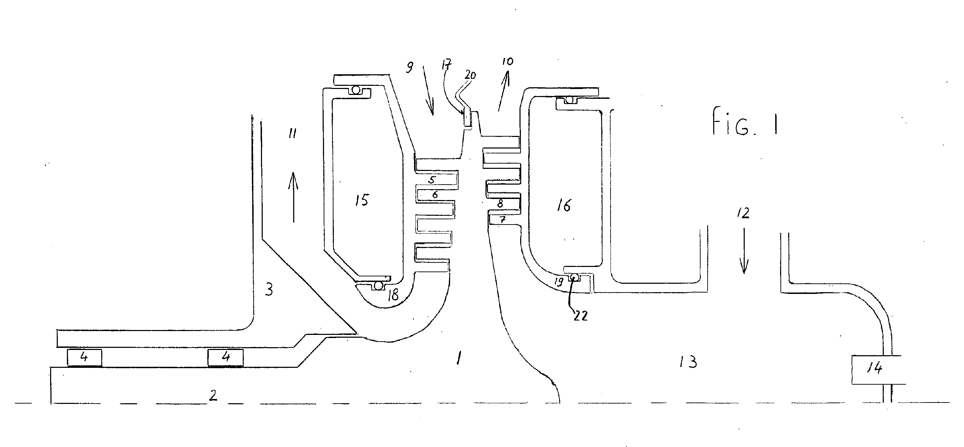

La figure 1 représente une coupe longitudinale médiane de la turbine à gaz conforme à l'invention.
La figure 2 représente une coupe longitudinale médiane partielle montrant un aubage du stator en appui glissant sur la paroi du rotor.

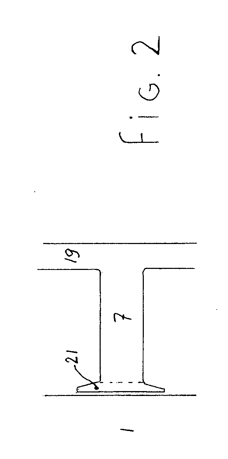

Le disque rotor (1) est prolongé par un arbre (2) porté par des paliers (4) solidaires d'un bati (3) .
Le disque rotor (1) porte d'un côté des aubages (6) de compression et de l'autre des aubages (8) de détente.
Les aubages (6) circulent entre des rangées d'aubages redresseurs (5) solidaires du stator de compresseur (18).
Les aubages (6) circulent entre des rangées d'aubages directeurs (7) solidaires du stator de la turbine (19).
Du côté compresseur, une cavité annulaire (15) contient du liquide de refroidissement.
Du côté turbine, une cavité annulaire (16) contient du liquide de refroidissement.
Un palier axial (17) appliqué axialement contre le rotor termine une cloison (20) de séparation entre le conduit d'admission d'air (9) et le conduit d'évacuation (10) des gaz brûlés.
L'air rentre dans la turbine à gaz par le conduit (9) est ensuite comprimé par les étages de compression constitués de paires d'aubages (5) et (6). L'air comprimé est ensuite conduit par (11) et (12) vers la chambre de combustion (13) où un injecteur (14) introduit le carburant.
Un conduit extérieur relie (11) et (12) pour le passage de l'air du compresseur vers la chambre de combustion.
La combustion se produit en (13) et les gaz brûlés se détendent dans la turbine constituée par les paires d'aubages (7) et (8).
Les gaz brûlés détendus sont évacués par le conduit (10) .
Les cavités (15) et (16) contiennent du liquide de refroidissement sous pression qui pousse les parois (18) et (19) vers le rotor (1) jusqu'à ce que les aubages (5) et (7) viennent en contact glissant sur le rotor. A cet effet, les parois (18) et (19) sont munies de joints (22) permettant le mouvement axial de ces parois.
Les aubages (5) et (7) se terminent par des patins (21) venant glisser sur le rotor, comme indiqué en figure 2.
Les aubages (5) et (7) peuvent être réglables pour un meilleur fonctionnement de la turbine à gaz au démarrage ou en charge partielle.
Typiquement, une turbine à gaz comporte beaucoup plus d'étages de compression que de détente, et si les étages de compression portés sur le disque rotor (1) ne sont pas suffisants, il y a possibilité de continuer la compression avec un ou plusieurs autres disques porteurs d'aubages ou un ou plusieurs compresseurs centrifuges portés par l'arbre de la turbine.

## Revendications

1. Turbine à gaz comprenant un disque rotor (1) muni d'aubages de compression (6) et de détente (8) et de chaque côté du disque rotor (1), des stators mobiles axialement (18) et (19) portant des aubages (5) et (7) terminés par des patins, **caractérisés en ce que** les aubages (5) et (7) viennent s'appuyer en contact glissant sur le rotor (1).

2. Turbine à gaz selon revendication 1) **caractérisée en ce que** la force d'appui des stators (18) et (19) sur le rotor (1) est fournie par la pression d'un liquide contenu dans des cavités annulaires (15) et (16) .

3. Turbine à gaz selon revendication 2) **caractérisée en ce que** le liquide contenu dans des cavités annulaires (15) et (16) refroidit les stators.

4. Turbine à gaz selon revendication 1) **caractérisée en ce que** les aubages (5) et (7) sont réglables.

## Revendications modifiées

### Revendications modifiées conformément à la règle 86(2) CBE.

1. Turbine à gaz comprenant un disque rotor (1) muni d'aubages de compression (6) et de détente (8) et de chaque côté du disque rotor (1), des stators mobiles axialement (18) et (19) portant des aubages (5) et (7) avec un système de rattrapage des jeux entre aubages rotoriques (6) (8) et les stators (18) (19) et entre les aubages statoriques (5) (7) et le rotor (1) **caractérisé en ce que** les aubages rotoriques (6) (8) et statoriques (5) (7) ont même longueur et que les aubages statoriques (5) (7) terminés par des patins, viennent s'appuyer en contact glissant sur le rotor (1) à l'aide d'une force d'appui des stators (18) (19) sur le rotor (1) fournie par la pression d'un liquide contenu dans des cavités annulaires (15) et (16) .

2. Turbine à gaz selon revendication 1) **caractérisée en ce que** les stators (18) (19) sont refroidis par le liquide contenu dans les cavités annulaires (15) et (16).
